# NEUE EUROPÄISCHE PATENTSCHRIFT

(11) **EP 0 212 579 B2**
(45) Veröffentlichungstag und Bekanntmachung des Hinweises auf die Entscheidung über den Einspruch: **29.03.1995**
(45) Hinweis auf die Patenterteilung: 18.03.1992
(21) Anmeldenummer: 86111264.7
(22) Anmeldetag: 14.08.1986
(51) Int. Cl.: A22B 5/20

(54) **Vorrichtung zum Öffnen der Brust von Schlachttierkörpern, insbesondere Rindern oder Schweinen**
Device for cutting up the breasts of carcasses, in particular of cattle or hogs
Dispositif pour ouvrir la poitrine des carcasses, en particulier des bovins ou porcs

(30) Priorität: 14.08.1985 DE 3529189; 04.12.1985 DE 3542890
(43) Veröffentlichungstag der Anmeldung: 04.03.1987
(73) Patentinhaber: Banss Maschinenfabrik GmbH & Co. KG, D-35216 Biedenkopf (DE)
(72) Erfinder: Rademacher, Rolf, D-3560 Biedenkopf (DE); Kaufman, Siegfried, D-3563 Dautphetal (DE)
(74) Vertreter: Klunker . Schmitt-Nilson . Hirsch

(56) Entgegenhaltungen:
- DE-A- 1 817 274
- DE-A- 2 421 225
- DE-B- 2 050 230
- FR-A- 2 551 950
- GB-A- 1 310 857
- NL-A- 7 502 050
- NL-A- 7 606 104
- NL-A- 8 103 105
- US-A- 3 588 947
- US-A- 3 916 482
- US-A- 4 090 275
- US-A- 4 145 811
- Broschüren der Firmen EFA, FREUND und JARVIS

## Beschreibung

Der Arbeitsablauf in Schlachthöfen ist in der Regel so, daß die zu schlachtenden Tiere zunächst, beispielsweise mittels elektrischen Strom, Schuß, Kopfschlag oder Betäubungsgas, betäubt werden, dann an den Hinterbeinen aufgehängt und abgestochen werden, dann im Brustbereich halbierend geöffnet werden, ausgeweidet werden, dann längs der Wirbelsäule halbiert werden und schließlich gegebenenfalls weiter zerlegt werden. Vor dem Öffnen des Brustbereichs werden beispielsweise Rinder enthäutet. Vorn Abstechen bis zum Halbieren werden die Schlachttiere, zumindest für einen Großteil der Bearbeitungsvorgänge, kopfunter hängend längs einer Transportbahn, in der Regel einer Rohrbahn, weiterbewegt. Insbesondere bei Schweinen schießt sich an das Abstechen eine Enthaarungsbehandlung an, die häufig nicht im hängenden Zustand durchgeführt wird.

Das Öffnen der Brust von Schlachttierkörpern wurde bisher in der Regel teilmechanisiert durchgeführt, indem beispielsweise ein geeignetes Trennwerkzeug, wie beispielsweise eine motorisch angetriebene Säge oder dergleichen, von Hand auf den jeweiligen Schlachttierkörper zur Einwirkung gebracht wurde.

Der Erfindung liegt die Aufgabe zugrunde, das Öffnen der Brust von hängend kontinuierlich weiterbewegten Schlachttierkörpern zu rationalisieren und dabei für eine günstige Bewegungsrichtung zu sorgen, in der das Trennwerkzeug zum Brustöffnen in den Schlachttierkörper eindringt.

Gegenstand der Erfindung ist eine Vorrichtung zum Öffnen der Brust von hängend kontinuierlich weiterbewegten Schlachttierkörpern, insbesondere Rindern oder Schweinen, mit folgenden Merkmalen:
(a) Ein mechanisiertes Trennwerkzeug ist von einer aufrechten Säule getragen:
(b) die Säule ist zwischen einer Betriebsstellung, in der das Trennwerkzeug mit dem Brustbereich des jeweiligen Tierkörpers in Eingriff ist, und einer Ruhestellung, in der sich das Trennwerkzeug außerhalb des Weiterbewegungsraums der Tierkörper befindet, bewegbar:
(c) die Säule ist hängend an einem Gestell angebracht, das mit einer der Weiterbewegungsgeschwindigkeit der Tierkörper entsprechenden Geschwindigkeit im wesentlichen in Weiterbewegungsrichtung der Tierkörper bewegbar ist, dadurch gekennzeichnet,
(d) daß die Säule zur Bewegung zwischen der Ruhestellung und der Betriebsstellung um eine im wesentlichen in Weiterbewegungsrichtung der Tierkörper verlaufende Achse schwenkbar an dem Gestell gelagert ist, wobei die Schwenkachse (24) so positioniert ist, daß sich das Vorderende (32) des Trennwerkzeugs (30) auf einer gekrümmt nach oben verlaufenden Kreisbahn in den Tierkörper (6) hineinbewegt.

Aus dem Dokument DE-A2 421 225 ist eine Vorrichtung mit den vorstehend angeführten Merkmalen (a), (b) und (c) bekannt, die allerdings nicht für das Öffnen der Brust von Schlachttieren, sondern für das halbierende Spalten von Schlachttieren vorgesehen ist. Bei der bekannten Vorrichtung ist die Säule in dem Gestell translatorisch quer zu der Weiterbewegungsrichtung der Tierkörper zwischen der Ruhestellung und, der Betriebsstellung verfahrbar.

Die Erfindung schafft eine Vorrichtung, mit der sich die Brust von weiterbewegten Schlachttierkörpern höhergradig mechanisiert unter Einsparung menschlicher Arbeitskraft öffnen läßt. Die Vorrichtung kann teilautomatisch arbeitend oder sogar bis hin zur vollautomatischen Arbeitsweise ausgebildet sein, so daß überhaupt keine menschliche Arbeitskraft dort mehr benötigt wird. Der Begriff "aufrechte Säule" bedeutet nicht, daß diese zwingend senkrecht ist, sondern soll nur eine generelle Ausrichtung der Säule von oben nach unten bedeuten. In der Betriebsstellung ist jedoch die Säule vorzugsweise, im wesentlichen senkrecht; die hierbei wesentlichen Gesichtspunkte werden weiter unten noch detaillierter ausgeführt. Die schwenkende Bewegbarkeit der Säule zwischen ihrer Ruhestellung und ihrer Betriebsstellung ist konstruktiv besonders unkompliziert zu verwirklichen und bringt das von der Säule getragene Trennwerkzeug auf einfache Weise für diejenigen Zeiten aus dem Weiterbewegungsraum der Tierkörper, in denen kein Brustöffnungsvorgang stattfindet. Die schwenkende Bewegung der Säule in die Betriebsstellung hat ferner den Vorteil, daß, sich die Spitze des Trennwerkzeugs auf einer gekrümmt nach oben verlaufenden Kreisbahn in den Tierkörper hineinbewegt, wodurch innere Körperteile, insbesondere der an den Brustraum anschließende Tiermagen, schonend nach oben gedrückt und durch das Trennwerkzeug nicht verletzt werden.

In bevorzugter Ausgestaltung der Erfindung ist das Trennwerkzeug aufwärts und abwärts beweglich von der Säule getragen. Dies ist insbesondere im Fall von Rindern häufig im Interesse der Arbeitsweise des Trennwerkzeugs günstig oder sogar erforderlich, um das Trennwerkzeug für den Öffnungs- bzw. Trennvorgang der Brust längs des Tierkörpers bewegen zu können. Insbesondere im Fall von Schweinen kann man allerdings das Trennwerkzeug so ausbilden, daß es für die Durchführung des Öffnungs- bzw. Trennvorgangs nicht längs des Schweinekörpers bewegt werden muß; hier hätte eine Beweglichkeit des Trennwerkzeugs aufwärts und abwärts primär den Sinn, das Trennwerkzeug auf unterschiedliche Schlachttierkörperlängen einstellen zu können. Das Trennwerkzeug ist im Fall von Rindern vorzugsweise eine motorisch angetriebene Stichsäge und im Fall von Schweinen vorzugsweise eine mechanisiert betätigte Schneidzange. Die Schneidzange kann so ausgebildet sein, daß die Schweinebrust mit einem einzigen Schneidzangenschließen aufgeschnitten wird. Die Schneidzange ist vorzugsweise pneumatisch oder hydraulisch für das Schließen und Öffnen der Schneidzange angetrieben, wobei jedoch auch andere Antriebsarten, beispielsweise elektrisch, möglich sind.

Zur Bewegung des Trennwerkzeugs in Längsrichtung der Säule eignet sich besonders eine Zylinder-Kolben-Einheit.

Für die Bewegung der Säule zwischen ihrer Ruhestellung und ihrer Betriebsstellung eignet sich besonders eine Zylinder-Kolben-Einheit.

Die Säule ist vorzugsweise hängend angeordnet, wodurch der Boden des Schlachthofs frei von störenden Einbauten bleibt. Besonders günstig ist eine hängende Anbringung der Säule an einem im wesentlichen in Weiterbewegungsrichtung der Tierkörper verfahrbaren Geste, um hiermit zugleich die Bewegbarkeit der Säule in Richtung der Weiterbewegung der Tierkörper zu schaffen.

Die Bewegung der Säule in Richtung der Weiterbewegung der Tierkörper mit einer der Weiterbewegungsgeschwindigkeit der Tierkörper entsprechenden Geschwindigkeit wird vorzugsweise mittels derjenigen Förderkette bewerkstelligt, die, in der Regel oberhalb der Transportbahn der Tierkörper verlaufend, die Weiterbewegung der Tierkörper längs der Transportbahn besorgt. Eine konstruktiv besonders glückliche Losung besteht darin, einen aus- und einfahrbaren Bolzen vorzusehen, der im ausgefahrenen Zustand in die Bewegungsbahn von Mitnehmern der Förderkette ragt, so daß er und mit ihm die Säule bzw. das die Säule tragende Gestell mit der Geschwindigkeit der Förderkette mitgenommen werden. Zum Aus- und Einfahren des Bolzens kann eine Zylinder-Kolben-Einheit vorgesehen sein. Es gibt jedoch auch andere Möglichkeiten zur Bewegung der Säule entsprechend der Weiterbewegungsgeschwindigkeit der Tierkörper, beispielsweise eine entsprechend gesteuerte, pneumatische oder hydraulische Zylinder-Kolben-Einheit.

Zum Zurückbewegen der Säule entgegen der Weiterbewegungsrichtung der Tierkörper nach jeweils durchgeführtem Brustöffnungsvorgang ist vorzugsweise eine Zylinder-Kolben-Einheit vorgesehen.

Vorstehend sind mehrfach Zylinder-Kolben-Einheiten als Antriebsmittel für diverse Bewegungen angesprochen worden. Diese Zylinder-Kolben-Einheiten sind vorzugsweise, wenn nichts anderes erwähnt ist, als pneumatische Einheiten vorgesehen.

Insbesondere wenn Tierkörper mit wesentlich wechselnder Länge verarbeitet werden sollen, ist es vorzuziehen, daß eine Tierkörperlängenfeststelleinrichtung vorhanden ist. Aufgrund der Feststellung der jeweiligen Tierkörperlänge kann man nach Erfahrungswerten bestimmen, in welcher Höhe das Trennwerkzeug zu Beginn des Trennvorgangs mit dem Tierkörper in Eingriff zu bringen ist, um den Trennvorgang nicht zu hoch und nicht zu tief zu beginnen. Insbesondere bei vollautomatischer Arbeitsweise kann man die Anfangsarbeitsposition des Trennwerkzeugs automatisch aufgrund des Feststellungswerts der Tierkörperlängenfeststelleinrichtung steuern. Als besonders geeignete Tierkörperlängenfeststelleinrichtungen kommen mechanische Schalter, Lichtschranken und Ultraschallfühler in Betracht, und zwar vorzugsweise entweder in höhenverfahrbarer Einzelanordnung oder in höhenmäßig gestaffelter Mehrfachanordnung.

In bevorzugter Ausgestaltung der Erfindung ist von der Säule ein mechanisiertes Öffnungswerkzeug zum Erzeugen einer Anfangsöffnung für das Einführen des Trennwerkzeugs getragen. Auf diese Weise ist das eigentliche Trennwerkzeug von der Aufgabe, zu Beginn des Trennvorgangs sich eine Anfangsöffnung im Tierkörper zu schaffen, für welche Aufgabe es je nach Konstruktion mehr oder weniger gut geeignet ist, befreit, und ein zum Erzeugen der Anfangsöffnung optimaler geeignetes Öffnungswerkzeug übernimmt diese Aufgabe. Die zu erzeugende Anfangsöffnung ist üblicherweise nur wenige cm tief, wobei die Anfangsöffnungstiefe üblicherweise so klein gehalten wird, daß insbesondere Innereien des Schlachttiers, wie der Pansen von Rindern, nicht herauskommen.

Als besonders günstiges und bevorzugtes Öffnungswerkzeug hat sich eine mit einem oder mehreren kreisförmigen Sägeblättern arbeitende Säge herausgestellt. Besonders günstig ist eine Säge, die mit zwei im wesentlichen parallel zueineander liegenden, relativ kleinen, kreisförmigen Sägeblättern arbeitet, die sich gegensinnig jeweils über einen Winkelbereich hin und her Stück drehen. Die Säge kann elektrisch oder durch einen Druckluftmotor angetrieben sein. Günstigerweise sieht man ein anschlagartiges Teil zur Begrenzung der Arbeitstiefe des Öffnungswerkzeugs vor.

Vorzugsweise ist das Öffnungswerkzeug relativ zu der Tragsäule von dem Tierkörper weg und zu dem Tierkörper hin in den Bereich vor dem Vorderende des Trennwerkzeugs bewegbar, vorzugsweise mittels einer Zylinder-Kolben-Einheit. Auf diese Weise kann man das Öffnungswerkzeug nach Erzeugung der Anfangsöffnung zurückfahren und freien Arbeitsraum für das eigentliche Trennwerkzeug schaffen.

Die Erfindung wird im folgenden anhand eines zeichnerisch dargestellten Ausführungsbeispiels noch näher erläutert.
Es zeigen:
- Fig. 1: eine Ansicht einer Vorrichtung zum Öffnen der Brust eines geschlachteten Rinds, gesehen in Richtung der Weiterbewegungsrichtung des Rinderkörpers;
- Fig. 2: eine Ansicht der Vorrichtung von Fig. 1 in einer dazu rechtwinkligen Blickrichtung, und zwar waagerecht und quer zur Weiterbewegungsrichtung der Rinderkörper, wobei der in Fig. 1 dargestellte Rinderkörper weggelassen ist.
- Fig. 3 und 4: zeigen eine Vorrichtung wie in Fig. 1 und 2, allerdings zusätzlich ausgerüstet mit einem Anfangs-Öffnungswerkzeug.

In den Figuren erkennt man eine Rohrbahn 2 im Querschnitt sowie ein darüber in Längsrichtung der Rohrbahn 2 angeordnetes Paar von aufrecht gestellten U-Eisen 4 zur Führung einer nicht dargestellten Förderkette. Ein Rinderkörper 6 mit bereits enferntem Kopf hängt mit nicht dargestellten Förderhaken, die über die Rohrbahn 2 greifen, an der Rohrbahn 2, und zwar quer, d.H. ein Hinterbein in Weiterbewegungsrichtung vorn und das andere Hinterbein gespreizt in Weiterbewegungsrichtung hinten. Der Rinderkörper 6 hängt mit den Vorderbeinen nach unten. Die nicht dargestellte Förderkette greift mit einem jeweiligen Mitnehmer hinter den nicht dargestellten Traghaken des in Weiterbewegungsrichtung vorderen Hinterbeins und fördert auf diese Weise den Rinderkörper 6. Längs der langgestreckten Rohrbahn 2 hängen, einer hinter dem anderen, eine Vielzahl von Rinderkörpern 6.

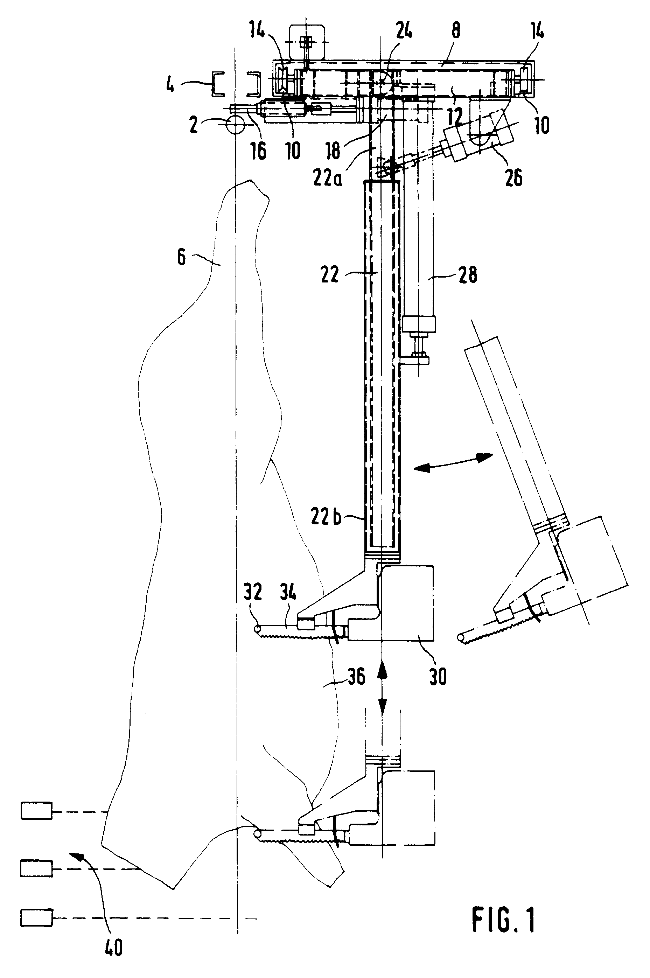

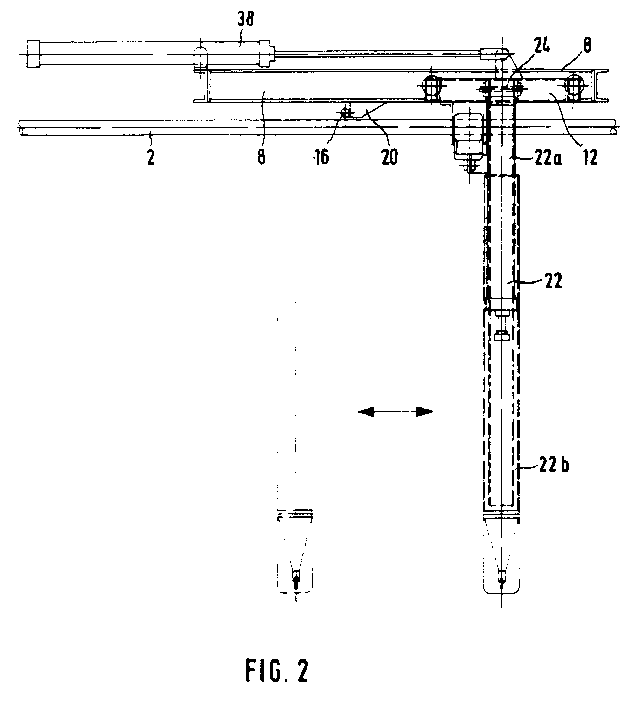

In Blickrichtung der Fig. 1 rechts neben der Rohrbahn und in Blickrichtung der Fig. 2 vor der Rohrbahn 2 ist ein Rahmen 8 an der nicht dargestellten Schlachthofdecke befestigt. Der Rahmen 8 besitzt ein Paar von quer zur Rohrbahn 2 beabstandeten Laufschienen 10, zwischen denen der Rahmen 8 größtenteils nach unten offen ist. Im Rahmen 8 ist ein Gestell 12 in Längsrichtung der Schienen 10 und der Rohrbahn 2 verfahrbar, und zwar mit Hilfe von vier auf den Schienen 10 abrollenden Rädern 14. Auf einer Seite des Gestells 12 sind die Räder 14 mit einer V-förmigen Umfangsnut versehen und ist die dortige Laufschiene entsprechend profiliert, so daß das Gestell 12 auf diese Weise geführt ist.

Das Gestell 12 trägt auf seiner Unterseite einen quer zur Rohrbahn 2 mittels einer pneumatischen Zylinder-Kolbeneinheit 18 aus- und einfahrbaren Bolzen 16. Der Bolzen 16 ragt im ausgefahrenen Zustand knapp über die Rohrbahn 2 und wird durch einen von der nicht dargestellten Förderkette nach unten ragenden Mitnehmer 20 in Weiterbewegungsrichtung der Rinderkörper mit deren Weiterbewegungsgeschwindigkeit mitgenommen.

An dem Gestell 12 hängt nach unten eine teleskopartige Säule 22, und zwar mittels eines Gelenks 24 mit parallel zur Rohrbahn 2 verlaufender Schwenkachse. Am Gestell 12 ist ferner eine pneumatische Zylinder-Kolben-Einheit 26 angelenkt, die mit dem Ende ihrer Kolbenstange an der Säule 22 im Abstand zum Gelenk 24 angelenkt ist. Mittels der Zylinder-Kolben-Einheit 26 kann die Säule 22 zwischen einer im wesentlichen senkrechten Betriebsstellung und einer in Fig. 1 gestrichelt angedeuteten Ruhestellung, in der das untere Ende der Säule 22 ein Stück von dem Rinderkörper weggeschwenkt ist, bewegt werden.

Die Säule 22 weist einen oberen, am Gelenk 24 befestigten Teil 22a und einen unteren, teleskopartig relativ zum Teil 22a bewegbaren Teil 22b auf. Zum Antrieb der Bewegung des Säulenteils 22b relativ zum Säulenteil 22a dient eine pneumatische Zylinder-Kolben-Einheit 28.

Am unteren Ende des Säulenteils 22b ist eine elektromotorisch angetriebene Stichsäge 30 als Trennwerkzeug zum Öffnen der Brust des Rinderkörpers 6 befestigt.

Die Arbeitsweise der Vorrichtung ist wie folgt: Zu Beginn eines Arbeitszyklus wird der Bolzen 16 ausgefahren. Bei Mitnahme des Bolzens 16 durch einen ankommenden Mitnehmer 20 ist automatisch eine Ausrichtung der Stichsäge 30 etwa auf die Mitte der Brust des Rinderkörpers 6 gewährleistet. Während das Gestell 12 und mit ihm die Säule 22 mit der Weiterbewegungsgeschwindigkeit des jeweiligen Rinderkörpers 6 in Längsrichtung der Rohrbahn 2 in dem Rahmen 8 bewegt wird, wird die Säule 22 aus der vom Rinderkörper 6 entfernten Ruhestellung in die im wesentlichen senkrechte Betriebsstellung geschwenkt. Im Verlauf dieser Schwenkbewegung trifft das vordere, obere Ende 32 des Sägeauslegers 34 von der Bauchseite her auf den Rinderkörper 6, und zwar im Bereich des hinteren, wegen des hängenden Zustands des Rinderkörpers 6 oberen Endes der Brust 36 des Rinderkörpers 6. Dieses vordere, obere Ende 32 ist gerundet, so daß im Verein mit der kreisbogenförmig aufwärts gekrümmten Bewegungsbahn dieses Endes 32 während der Schwenkbewegung der Säule 22 der Pansen des Rinderkörpers 6 schonend nach oben zurückgedrängt wird. Das Sägeblatt der Stichsäge 30 weist die Sägeverzahnung unten auf. Die Stichsäge 30 befindet sich bei der geschilderten Schwenkbewegung der Säule 22 auf einer derartigen Höhe, daß das vordere, obere Ende 32 im beschriebenen Bereich auf den Rinderkörper 6 trifft.

Noch während oder nach Beendigung der beschriebenen Schwenkbewegung der Säule 22 wird der untere Säulenteil 22b nach unten bewegt, so daß die Stichsäge 30 mit im Rinderkörper 6 befindlichen Sägeausleger 34 das Aufsägen der Brust 36 des Rinderkörpers 6 durchführt. Nach Beendigung dieses Trennvorgangs wird die Säule wieder in die Ruhestellung vom Rinderkörper 6 weggeschwenkt und die Stichsäge 30 durch Bewegung des unteren Säulenteils 22b nach oben gefahren. Nach Beendigung des Trennvorgangs wird ferner der Bolzen 16 eingefahren, so daß das Gestell 12 stehenbleibt. Mittels einer pneumatischen Zylinder-Kolben-Einheit 38 (Fig. 2), die zwischen dem Rahmen 8 und dem Gestell 12 wirkt, wird das Gestell 12 entgegen der Weiterbewegungsrichtung der Rinderkörper 6 rasch in die Ausgangsposition des Arbeitszyklus zurückgefahren, wo die Vorrichtung rechtzeitig zur Ankunft des nächsten Rinderkörpers 6 für den nächsten Arbeitszyklus zur Verfügung steht.

Im Fall von Schweinen ist es bevorzugt, statt der Stichsäge 30 eine pneumatische oder hydraulische Schneidzange einzusetzen, die so lang ist. daß mit einem einzigen Schneidzangenschließen die gesamte Schweinebrust geöffnet wird. Eine derartige Ausführunsform ist nicht zeichnerisch dargestellt. Sie entspricht jedoch der zeichnerisch dargestellten Ausführungsform, wobei lediglich statt der Stichsäge 30 die Schneidzange am unteren Ende des unteren Säulenteils 22b angebracht ist. Beim Hinschwenken der Säule 22 zum Schweinekörper weist die Spitze der geöffneten Schneidzange schräg nach unten und sticht in den Bereich des hinteren Brustendes des Schweinekörpers ein, wobei in analoger Weise der Schweinemagen schonend nach oben zurückgedrängt wird. Nach diesem Einstechen wird die Schneidzange, ggf. nach einer Schwenkbewegung relativ zur Säule 22, um sie in eine steilere Stellung zu bringen, geschlossen. Sonst sind Konstruktion und Arbeitsablauf so, wie vorstehend geschildert.

Mit 40 ist eine Tierkörperlängenfeststelleinrichtung bezeichnet, die drei im Abstand übereinander angeordnete Ultraschallsensoren aufweist. Aus der Information, welcher der Sensoren - von unten nach oben gezählt - als erster das Vorhandensein des kopflosen Tierkörpers in seinem Ultraschallwellenweg feststellt, ergibt sich mit ausreichender Genauigkeit die Tierkörperlänge. Dann weiß man aus Erfahrung mit ausreichender Genauigkeit, wie viel höher man die Anfangsarbeitsposition des Trennwerkzeugs vorsehen muß.

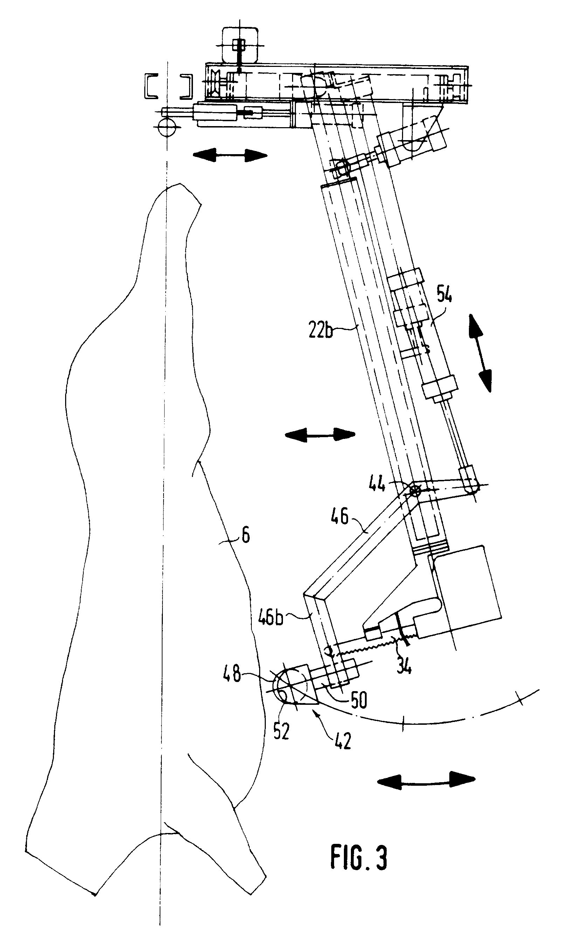

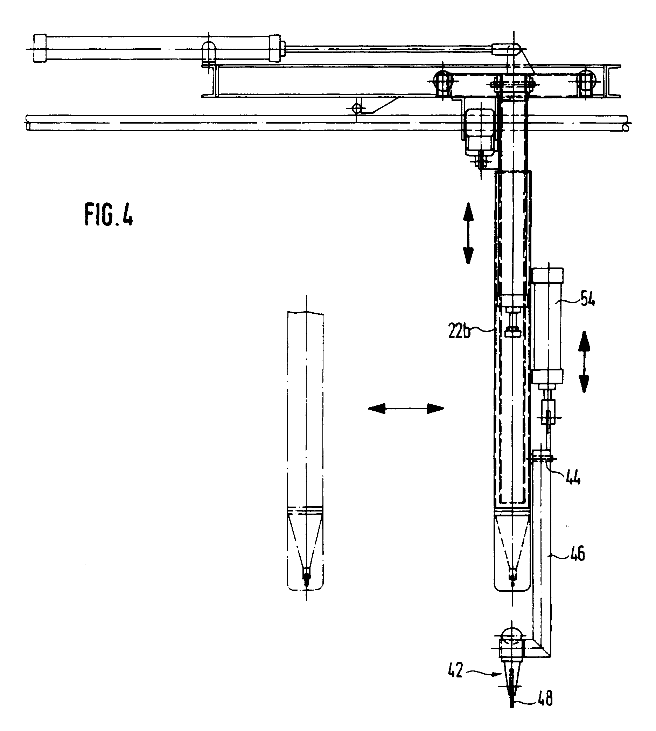

Die Fig. 3 und 4 zeigen die Vorrichtung von Fig. 1 und 2, jeweils in der gleichen Blickrichtung, wobei allerdings zusätzlich ein Anfangs-Öffnungswerkzeug in Gestalt einer nachfolgend noch genauer zu beschreibenden Säge 42 vorgesehen ist und die gleich gebliebenen Teile der Vorrichtung nicht nochmals mit Bezugsziffern versehen sind und nicht nochmals beschrieben werden.

Im unteren Endbereich des Säulenteils 22b ist ein sich parallel zur Rohrbahn 2 erstreckender Zapfen 44 angebracht. Auf dem Zapfen 44 ist schwenkbar ein mehrfach abgewinkelter Hebel 46 gelagert. Der Hebel 46 trägt in seinem dem Rinderkörper 6 benachbarten Endbereich 46b, der in der Betriebsstellung der Säge 42 im wesentlichen parallel zur Säule 22 ist, die zum Rinderkörper hin vorragende Säge 42. Die Säge 42 arbeitet mit zwei parallel und koaxial angeordneten, kreisförmigen Sägeblättern 48. Die Drehachse der Sägeblatter 48 verläuft parallel zur Rohrbahn 2. In einem hohlzylindrischen Tragteil 50 der Sägeblätter 48, das sich in der Arbeitsposition der Säge 42 im wesentlichen rechtwinklig zur Säule 22 zum Rinderkörper 6 hin erstreckt und an dem Endbereich 46b des Hebels 46 befestigt ist, befindet sich ein nicht gezeichneter Druckluftmotor zum Antreiben des Sägeblätter 48. Der Druckluftmotor treibt die Sägeblätter 48 so an, daß sie sich immer gegenläufig drehen und dabei jeweils abwechselnd in beiden Drehrichtungen um einen Winkelbereich.

Beidseits der Sägeblätter 48 befindet sich jeweils ein konvexes Anschlagteil 52 (nur in Fig. 3 eingezeichnet) in Form eines gekrümmten Blechs oder gekrümmten Kunststoffteils. Die Anschlagteile 52 sind gegenüber dem dem Rinderkörper am nächsten liegenden Umfangsbereich der Sägeblätter 48 um wenige cm zurückgesetzt, so daß sie die Schnittiefe der Sägeblätter 48 in den Rinderkörper 6 begrenzen.

Bei Vorhandensein des Anfangs-Öffnungswerkzeugs modifiziert sich die weiter vorn geschilderte Arbeitsweise der Vorrichtung wie folgt:
Bei noch vom Rinderkörper 6 entfernter Stellung oder bei dem Rinderkörper 6 bereits ein Stück genäherter Stellung der Säule 22 wird das Öffnungswerkzeug 42 durch Auseinanderfahren einer pneumatischen oder hydraulischen Zylinder-Kolben-Einheit 54, die zwischen dem Säulenteil 22b und dem in Fig. 3 rechten Endpunkt des Hebels 46 wirkt, durch Verschwenken des Hebels 46 im Uhrzeigersinn (Fig. 3) längs eines Kreisbogens an den Rinderkörper 6 herangebracht, so daß die Sägeblätter 48 einen schlitzförmigen Einschnitt von etwa 3 bis 4 cm Tiefe einschneiden. Dann wird durch Zusammenfahren der Zylinder-Kolben-Einheit 54 das Öffnungswerkzeug 42 so weit nach unten-außen zurückgefahren, daß sich der Hebel 46 und das Öffnungswerkzeug 42 komplett hinter dem Sägeausleger 34 befinden. Dann wird die Säule 22 in die Betriebsstellung geschwenkt, wobei die Positionierung des Öffnungswerkzeugs 42 an der Säule 22 so gewählt ist, daß die Spitze des Sägeauslegers 34 in die Anfangsöffnung trifft. Eine Vorrichtung zum Brustöffnen von Schweinekörpern kann in analoger Weise mit einem Öffnungswerkzeug zum Erzeugen einer Anfangsöffnung ausgestattet sein. Man kann auch vorsehen, daß der Kopf des Tierkörpers beim Brustöffnen noch nicht von diesem abgetrennt worden ist.

## Patentansprüche

1. Vorrichtung zum Öffnen der Brust von hängend kontinuierlich weiterbewegten Schlachttierkörpern, insbesondere Rindern oder Schweinen, mit folgenden Merkmalen:
(a) ein mechanisiertes Trennwerkzeug (30) ist von einer aufrechten Säule (22) getragen;
(b) die Säule (22) ist zwischen einer Betriebsstellung, in der das Trennwerkzeug (30) mit dem Brustbereich (36) des jeweiligen Tierkörpers (6) in Eingriff ist, und einer Ruhestellung, in der sich das Trennwerkzeug (30) außerhalb des Weiterbewegungsraums der Tierkörper (6) befindet, bewegbar;
(c) die Säule (22) ist hängend an einem Gestell (12) angebracht, das mit einer der Weiterbewegungsgeschwindigkeit der Tierkörper (6) entsprechenden Geschwindigkeit im wesentlichen in Weiterbewegungsrichtung der Tierkörper (6) bewegbar ist, dadurch gekennzeichnet,
(d) daß die Säule (22) zur Bewegung zwischen der Ruhestellung und der Betriebsstellung um eine im wesentlichen in Weiterbewegungsrichtung der Tierkörper (6) verlaufende Achse (24) schwenkbar an dem Gestell (12) gelagert ist, wobei die Schwenkachse (24) so positioniert ist, daß sich das Vorderende (32) des Trennwerkzeugs (30) auf einer gekrümmt nach oben verlaufenden Kreisbahn in den Tierkörper (6) hineinbewegt.

2. Vorrichtung nach Anspruch 1, dadurch gekennzeichnet, daß das Trennwerkzeug (30) aufwärts und abwärts beweglich von der Säule (22) getragen ist.

3. Vorrichtung nach Anspruch 1 und 2, dadurch gekennzeichnet, daß das Trennwerkzeug für das Öffnen der Brust von Rindern eine Stichsäge (30) ist.

4. Vorrichtung nach Anspruch 1 oder 2, dadurch gekennzeichnet, daß das Trennwerkzeug für das Öffnen der Brust von Schweinen eine mechanisiert betätigte Schneidzange ist.

5. Vorrichtung nach Anspruch 4, dadurch gekennzeichnet, daß die Schneidzange so lang ist, daß die Schweinebrust mit einen Schneidzangenschließen geöffnet wird.

6. Vorrichtung nach Anspruch 4 oder 5, dadurch gekennzeichnet, daß die Schneidzange pneumatisch oder hydraulisch angetrieben ist.

7. Vorrichtung nach einem der Ansprüche 2 bis 6, dadurch gekennzeichnet, daß zur Bewegung des Trennwerkzeugs (30) eine Zylinder-Kolben-Einheit (28) vorgesehen ist.

8. Vorrichtung nach einem der Ansprüche 1 bis 7, dadurch gekennzeichnet, daß für die Bewegung der Säule (22) zwischen der Ruhestellung und der Betriebsstellung eine Zylinder-Kolben-Einheit (26) vorgesehen ist.

9. Vorrichtung nach einem der Ansprüche 1 bis 8, dadurch gekennzeichnet, daß die Säule (22) für die Bewegung entsprechend der Weiterbewegung der Tierkörper (6) mit einer Förderkette, die die Weiterbewegung der Tierkörper (6) besorgt, koppelbar ist, vorzugsweise mittels eines aus- und einfahrbaren Bolzens (16), hinter den ein jeweiliger Mitnehmer (20) der Förderkette greift.

10. Vorrichtung nach Anspruch 9, dadurch gekennzeichnet, daß zum Aus- und Einfahren des Bolzens (16) eine Zylinder-Kolben-Einheit (18) vorgesehen ist.

11. Vorrichtung nach einem der Ansprüche 1 bis 10, dadurch gekennzeichnet, daß zum Zurückbewegen der Säule (22) entgegen der Weiterbewegungsrichtung der Tierkörper (6) eine Zylinder-Kolben-Einheit (38) vorgesehen ist.

12. Vorrichtung nach einem der Ansprüche 2 bis 11, gekennzeichnet durch eine Tierkörperlängenfeststelleinrichtung (40), die die Anfangsarbeitsposition des Trennwerkzeugs (30) steuert.

13. Vorrichtung nach einem der Ansprüche 1 bis 12,
dadurch **gekennzeichnet**,
daß von der Säule (22) ein mechanisiertes Öffnungswerkzeug (42) zum Erzeugen einer Anfangsöffnung für das Einführen des Trennwerkzeugs (30) getragen ist.

14. Vorrichtung nach Anspruch 13,
dadurch **gekennzeichnet**,
daß das Öffnungswerkzeug (42) eine mit einer oder zwei kreisförmigen Sägeblättern (48) arbeitende Säge ist.

15. Vorrichtung nach Anspruch 13 oder 14,
dadurch **gekennzeichnet**,
daß das Öffnungswerkzeug (42) relativ zu der Tragsäule (22) von dem Tierkörper (6) weg und zu dem Tierkörper hin in den Bereich vor dem Vorderende des Trennwerkzeugs (30) bewegbar ist, vorzugsweise mittels einer Zylinder-Kolben-Einheit (54).

## Claims

1. A device for opening up the breast of bodies of slaughtered animals, in particular cattle or hogs, moving on in continuous manner in a suspended condition, having the following features:
(a) a mechanized separating tool (30) is carried by an upright column (22);
(b) the column (22) is movable between an operating position, in which the separating tool (30) is in engagement with the breast region of the particular animal body (6), and a rest position, in which the separating tool (30) is located outside of the conveying region of the animal bodies (6);
(c) the column (22) is suspended on a frame (12) which is movable substantially in animal body conveying direction at a speed corresponding to the conveying speed of the animal bodies (6),
characterized in
(d) that the column (22), for movement between the rest position and the operating position, is mounted to said frame (12) so as to be pivotable about an axis (24) extending substantially in the conveying direction of the animal bodies (6), the pivot axis (24) being positioned such that the front end (32) of the separating tool (30) moves into the animal body (6) on an upwardly curved circular path.

2. A device according to claim 1,
characterized in that the separating tool (30) is carried by the column (22) so as to be movable up and down.

3. A device according to claims 1 and 2,
characterized in that the separating tool for opening up the breasts of cattle is a compass saw (30).

4. A device according to claim 1 or 2,
characterized in that the separating tool for opening up the breasts of hogs is a mechanized cutting pliers.

5. A device according to claim 4,
characterized in that the cutting pliers is of such a length that the hog breast is opened up by one single cutting pliers closure operation.

6. A device according to claim 4 or 5,
characterized in that the cutting pliers is driven pneumatically or hydraulically.

7. A device according to any one of claims 2 to 6,
characterized in that a piston and cylinder unit (28) is provided for moving the separating tool (30).

8. A device according to any one of claims 1 to 7,
characterized in that a piston and cylinder unit (26) is provided for moving the column (22) between the rest position and the operating position.

9. A device according to any one of claims 1 to 8,
characterized in that the column (22), for movement in accordance with the conveying motion of the animal bodies (6), is adapted to be coupled to a conveyor chain for providing the conveying motion of the animal bodies (6), preferably by means of a projectable and retractable bolt (16) behind which engages a respective dog (20) of the conveyor chain.

10. A device according to claim 9,
characterized in that a piston and cylinder unit (18) is provided for projecting and retracting the bolt (16).

11. A device according to any one of claims 1 to 10,
characterized in that a piston and cylinder unit (38) is provided for moving the column (22) back opposite to the conveying direction of the animal bodies (6).

12. A device according to any one of claims 2 to 11,
characterized by an animal body length detecting means (40) controlling the initial working position of the separating tool (30).

13. A device according to any one of claims 1 to 12,
characterized in that the column (22) carries a mechanized opening tool (42) for providing an initial opening for introducing the separating tool (30).

14. A device according to claim 13,
characterized in that the opening tool (42) is a saw using one or two circular saw disks (48).

15. A device according to claim 13 or 14,
characterized in that the opening tool (42) relative to the supporting column (22) is movable away from the animal body (6) and towards the animal body into the region in front of the forward end of the separating tool (30), preferably by means of a piston and cylinder unit (54).

## Revendications

1. Dispositif pour ouvrir la poitrine de corps d'animaux abattus, notamment de boeufs ou de porcs, transportés, suspendus, en continu, présentant les caractéristiques suivantes :
a) un outil de sectionnement (30) mécanisé est porté par un montant (22) vertical ;
b) le montant (22) est déplaçable entre une position de fonctionnement dans laquelle l'outil de sectionnement (30) est en prise avec la zone de la poitrine (36) du corps (6) de l'animal, et une position de repos dans laquelle l'outil de sectionnement (30) se trouve à l'extérieur de l'espace d'enlèvement des corps (6) ;
c) le montant (22) est suspendu à un bâti (12) qui est déplaçable dans la direction d'enlèvement des corps (6), à une vitesse correspondant à la vitesse de transport des corps (6),
caractérisé en ce que
d) pour le déplacement entre la position de repos et la position de fonctionnement, le montant (22) est monté pivotant sur le bâti (12), autour d'un axe (24) s'étendant à peu près dans la direction d'enlèvement des corps (6), l'axe (24) de pivotement positioné tel que l'extrémité (32) de l'outil de sectionnement (30) se déplace sur une trajectoire courbée vers le haut en arc de cercle dans le corps de l'animal (6).

2. Dispositif selon la revendication 1, caractérisé en ce que l'outil de sectionnement (30) est porté par le montant (22), de manière à pouvoir être relevé et abaissé.

3. Dispositif selon les revendications 1 et 2, caractérisé en ce que l'outil de sectionnement pour ouvrir la poitrine des boeufs est une scie sauteuse (30).

4. Dispositif selon la revendication 1 ou 2, caractérisé en ce que l'outil de sectionnement pour ouvrir la poitrine des porcs est une pince coupante actionnée par un mécanisme.

5. Dispositif selon la revendication 4, caractérisé en ce que la pince coupante est suffisamment longue pour que la poitrine des porcs soit ouverte avec une fermeture de la pince coupante.

6. Dispositif selon la revendication 4 ou 5, caractérisé en ce que la pince coupante est entraînée pneumatiquement ou hydrauliquement.

7. Dispositif selon l'une des revendications 2 à 6, caractérisé en ce que pour déplacer l'outil de sectionnement (30) il est prévu un vérin (28).

8. Dispositif selon l'une des revendications 1 à 7, caractérisé en ce que pour déplacer le montant (22) entre la position de repos et la position de fonctionnement, il est prévu un vérin (26).

9. Dispositif selon l'une des revendications 1 à 8, caractérisé en ce que le montant (22) peut être accouplé pour le déplacement en fonction de l'enlèvement des corps (6), avec une chaîne de transport qui assure l'enlèvement des corps (6), de préférence au moyen d'une cheville (16) qui peut être extraite et introduite, derrière laquelle passe un entraîneur (20) de la chaîne de transport.

10. Dispositif selon la revendication 9, caractérisé en ce que pour extraire et introduire la cheville (16) il est prévu un vérin (18).

11. Dispositif selon l'une des revendications 1 à 10, caractérisé en ce que pour replacer le montant (22) dans le sens contraire au sens d'enlèvement des corps (6), il est prévu un vérin (38).

12. Dispositif selon l'une des revendications 2 à 11, caractérisé par un dispositif de détermination de longueur de corps (40) qui commande la position initiale de l'outil de sectionnement (30).

13. Dispositif selon l'une des revendications 1 à 12, caractérisé en ce que le montant (22) porte un outil d'ouverture (42) mécanisé pour produire une ouverture initiale en vue de l'introduction de l'outil de sectionnement (30).

14. Dispositif selon la revendication 13, caractérisé en ce que l'outil d'ouverture (42) est une scie fonctionnant avec un ou deux lames de scie circulaires (48).

15. Dispositif selon la revendication 13 ou 14, caractérisé en ce que l'outil d'ouverture (42) peut se déplacer, par rapport au montant de support (22), à partir du corps (6) et vers celui-ci, dans la région située devant l'extrémité avant de l'outil de sectionnement (30), de préférence au moyen d'un vérin (54).
